# EUROPEAN PATENT SPECIFICATION

(11) **EP 4 119 861 B1**
(45) Date of publication and mention of the grant of the patent: **29.01.2025**
(21) Application number: 21184944.3
(22) Date of filing: 12.07.2021
(51) Int. Cl.: F24F 11/62, F24F 11/70

(54) **HEATING, VENTILATION, AND AIR-CONDITIONING SYSTEM AND METHOD OF CONTROLLING A HEATING, VENTILATION, AND AIR-CONDITIONING SYSTEM**
HEIZUNGS-, LÜFTUNGS- UND KLIMAANLAGE UND VERFAHREN ZUR STEUERUNG EINER HEIZUNGS-, LÜFTUNGS- UND KLIMAANLAGE
SYSTÈME DE CHAUFFAGE, DE VENTILATION ET DE CLIMATISATION ET PROCÉDÉ DE COMMANDE D'UN SYSTÈME DE CHAUFFAGE, DE VENTILATION ET DE CLIMATISATION

(43) Date of publication of application: 18.01.2023
(73) Proprietor: Robert Bosch GmbH, 70442 Stuttgart (DE)
(72) Inventor: Tanyildiz, Baris, 574036 Singapore (SG); Pradipta, Justin, 570109 Singapore (ID); Cola, Fabrizio, 534635 Singapur (SG)

(56) References cited:
- CN-A- 109 740 787
- CN-A- 110 736 244
- CN-A- 111 735 177

## Description

### Technical field

The invention relates to a heating, ventilation, and air-conditioning, HVAC, system and a method of controlling a heating, ventilation, and air-conditioning, HVAC, system.

### Background

A heating, ventilation, and air-conditioning, HVAC, system may be employed to control an indoor environment (e.g., in a building) to provide a thermal comfort and/or a desired indoor air quality. However, to achieve desired indoor environmental conditions (e.g., a temperature, e.g., a humidity, etc.), the HVAC system may consume a specific load (e.g., a specific power consumption) which may depend on various parameters. It may be advantageous to predict a load of the HVAC system within a future time period (e.g., a future power consumption) to adapt a control of the HVAC system such that a load which is actually used within the time period is reduced as compared to the predicted load. Various aspects relate to a HVAC system and a method of controlling a HVAC system capable to predict a load for a future time period and to control the HVAC system to reduce an actual load within the future time period as compared to the predicted load. For example, a heating/cooling rate of the HVAC system may be adapted to the reduced the actually required load within the future time period. This may reduce an energy consumption of the HVAC system and, thus, also reducing costs as well as increasing an environmental sustainability. Illustratively, an energy-efficient HVAC system and a method of an energy-efficiently controlling a HVAC system are provided.

Document CN109 740 787A discloses an air conditioning load forecasting model establishing method for a building, which involves establishing an air conditioning load prediction model based on a sample feature set and corresponding tag data using a preset machine learning algorithm.

### Summary

The invention relates to a method of controlling a heating, ventilation, and air-conditioning, HVAC, system, as defined in claim 1.

According to various embodiments, the HVAC system may include or may be a variable refrigerant flow system.

According to various embodiments, the predicted load may represent an amount of energy required by the HVAC system to achieve the requested indoor environmental conditions during the future time period.

According to various embodiments, the indoor environmental conditions further may include an indoor humidity.

According to various embodiments, the outdoor environmental conditions may include an outdoor temperature. According to various embodiments, the outdoor environmental conditions may include a solar surface radiation. According to various embodiments, the outdoor environmental conditions may include an outdoor humidity.

According to various embodiments, the method may include further include: detecting an occupancy rate of an indoor zone in which the indoor environmental conditions are controlled by the HVAC system; and determining a predicted occupancy rate within the future time period using calendar information and/or occupancy statistics representing an occupancy of the indoor zone; wherein inputting the detected indoor environmental conditions and the detected outdoor environmental conditions into the load prediction model to generate the predicted load may include inputting the detected indoor environmental conditions, the detected outdoor environmental conditions, and the detected occupancy rate into the load prediction model to generate the predicted load; and wherein inputting the requested indoor environmental conditions and the predicted outdoor environmental conditions into the trained load prediction model to determine the predicted load for the future time period may include inputting the requested indoor environmental conditions, the predicted outdoor environmental conditions, and the predicted occupancy rate into the trained load prediction model to determine the predicted load for the future time period.

According to various embodiments, inputting the detected indoor environmental conditions and the detected outdoor environmental conditions into the load prediction model to generate the predicted load may include inputting the detected indoor environmental conditions, the detected outdoor environmental conditions, and a time of day at which the indoor environmental conditions, the load of the HVAC system, and the outdoor environmental conditions are detected into the load prediction model to generate the predicted load; and inputting the requested indoor environmental conditions and the predicted outdoor environmental conditions into the trained load prediction model to determine the predicted load for the future time period may include inputting the requested indoor environmental conditions, the predicted outdoor environmental conditions, and a time of day associated with the future time period into the trained load prediction model to determine the predicted load for the future time period.

According to various embodiments, the method may further include: detecting a load of the HVAC system in the future time period; determining a further loss value by comparing the predicted load for the future time period with the load of the HVAC system detected in future time period; and further training the load prediction model to reduce the further loss value.

The invention further relate to a heating, ventilation, and air-conditioning, HVAC, system, as defined in claim 10..

### Brief description of the drawings

The invention will be better understood with reference to the detailed description when considered in conjunction with the non-limiting examples and the accompanying drawings, in which:
- FIG. 1 and FIG. 5 each show a processing system for controlling a HVAC system according to various embodiments;
- FIG. 2 and FIG. 4 each show a processing system for training a load prediction model used to control a HVAC system according to various embodiments;
- FIG. 3A shows a method of controlling a HVAC system according to various embodiments;
- FIG. 3B shows a method of training a load prediction model used to control a HVAC system according to various embodiments; and
- FIG. 6 shows an exemplary HVAC system according to various embodiments.

### Detailed description

The following detailed description refers to the accompanying drawings that show, by way of illustration, specific details and embodiments in which the invention may be practiced. These embodiments are described in sufficient detail to enable those skilled in the art to practice the invention. Other embodiments may be utilized and structural, and logical changes may be made without departing from the scope of the invention. The various embodiments are not necessarily mutually exclusive, as some embodiments can be combined with one or more other embodiments to form new embodiments.

Embodiments described in the context of one of the methods are analogously valid for the other methods. Similarly, embodiments described in the context of a HVAC system are analogously valid for a method, and vice-versa.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

In the context of various embodiments, the articles "a", "an" and "the" as used with regard to a feature or element include a reference to one or more of the features or elements.

As used herein, the term "and/or" includes any and all combinations of one or more of the associated listed items.

In an embodiment, a "computer" may be understood as any kind of a logic implementing entity, which may be hardware, software, firmware, or any combination thereof. Thus, in an embodiment, a "computer" may be a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "computer" may also be software being implemented or executed by a processor, e.g. any kind of computer program, e.g. a computer program using a virtual machine code such as Java. A "computer "may be or may include one or more processors. Any other kind of implementation of the respective functions which will be described in more detail below may also be understood as a "computer" in accordance with an alternative embodiment.

A "memory" may be used in the processing carried out by a computer and/or may store data used by the computer. A "memory" used in the embodiments may be a volatile memory, for example a DRAM (Dynamic Random Access Memory) or a non-volatile memory, for example a PROM (Programmable Read Only Memory), an EPROM (Erasable PROM), EEPROM (Electrically Erasable PROM), or a flash memory, e.g., a floating gate memory, a charge trapping memory, an MRAM (Magnetoresistive Random Access Memory) or a PCRAM (Phase Change Random Access Memory).

A "load prediction model" as used herein, may be any kind of model capable to predict a load responsive to inputting one or more parameters and/or information as described herein. Illustratively, a "load prediction model" may map the inputted parameters and/or information in accordance with the ones described herein to a predicted load. A "model" may be, for example, based on machine learning (e.g., may employ a machine learning algorithm). Illustratively, a "model" may be adapted (e.g., trained) using machine learning. A "model" may be a decision tree model, a random forest model, a gradient boosting model, a support vector machine, a k-nearest neighbor model, a neural network, etc. A "neural network" may be any kind of neural network, such as an autoencoder network, a convolutional neural network, a variational autoencoder network, a sparse autoencoder network, a recurrent neural network, a deconvolutional neural network, a generative adversarial network, a forward-thinking neural network, a sum-product neural network, etc. A "neural network" may include any number of layers. A neural network may be trained via any training principle, such as backpropagation.

A "load" of a HVAC system, as used herein, may represent an amount of energy required to achieve associated indoor environmental conditions (e.g., an indoor temperature, e.g., an indoor humidity). Illustratively, a "load" of a HVAC system may be a power consumption of the HVAC system. A "load" of a HVAC system may be an amount of energy required to keep a condition of an associated zone within required/requested conditions. A "load" of a HVAC system may be a cooling load and/or a heating load.

While the disclosure has been particularly shown and described with reference to specific embodiments, it should be understood by those skilled in the art that various changes in form and detail may be made therein without departing from the scope of the invention as defined by the appended claims.

Various aspects relate to a method which predicts a load of a HVAC system within a future time period and which controls the HVAC system (e.g., adapts currently set parameters) such that the HVAC system consumes less energy within the time period. For example, at a specific day a load of the HVAC system may be predicted for the next day and the control of the HVAC system is adapted such that the actually consumed load on the next day (i.e., then the present day) is reduced as compared to the predicted load. Illustratively, a future load is predicted and setting are changed such that the consumed load in the future is reduced.

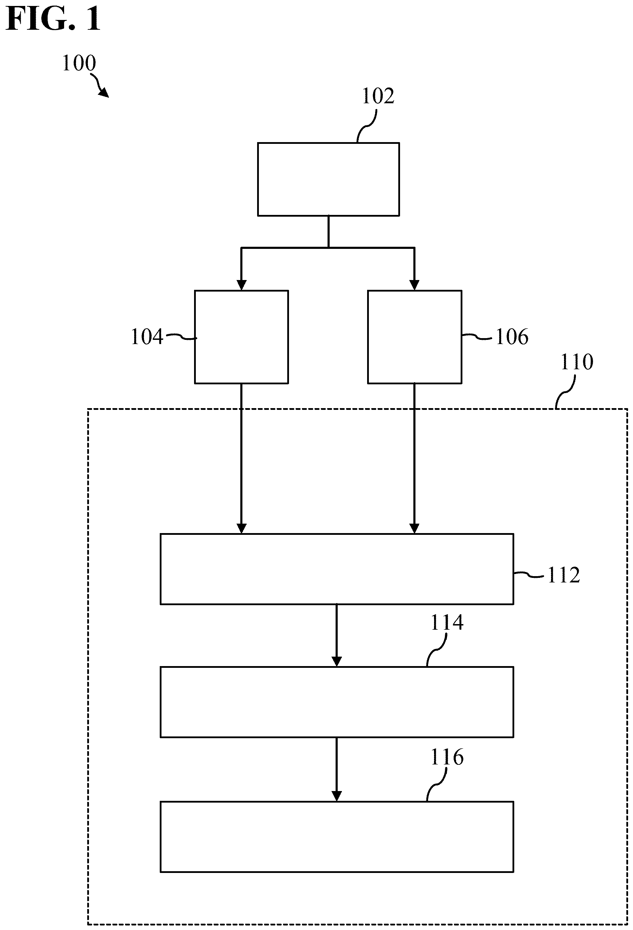

FIG. 1 shows a processing system 100 for controlling a HVAC system according to various embodiments. The HVAC system may be or may include a Variable Refrigerant Flow (VRF) system. The HVAC system may be or may include a VRF system and/or a chiller system. The HVAC system may include one or more HVAC devices. The one or more HVAC devices may be configured to control (e.g., to keep stable, e.g., to change) one or more environmental parameters in a surrounding of the one or more HVAC devices in accordance with set running parameters (e.g., a set HVAC temperature). Running parameters of a HVAC device, as used herein, may be any kind of parameters associated with changing environmental conditions, such as a fan speed, a valve opening (e.g., of a valve for controlling a flow of a cooling liquid, such as a throughput of cooling water), etc. An environmental parameter of the one or more environmental parameters may be, for example, a temperature, a humidity, or a dew point. The HVAC system may be associated with an indoor environment (e.g., an environment in a building) and an outdoor environment (e.g., an environment outside the building, e.g., an environment at an outer wall of the building). The indoor environment may include a plurality of zones (e.g., regions). For example, a zone of the plurality of zones associated with the HVAC system may be a room within the indoor environment. Each zone of the plurality of zones may be associated at least one HVAC device of the one or more devices. The at least one HVAC devices associated with a zone may be configured to control (e.g., to keep stable, e.g., to change) one or more environmental parameters within the zone.

The processing system 100 may include a computer 110. The computer 110 may be configured to control the HVAC system. For example, the computer 110 may be configured to control the one or more HVAC devices (e.g., via setting a respective HVAC temperature associated with each of the one or more HVAC devices). The computer 110 include one or more processors. The computer 110 may be any kind of logic implementing entity, as described above. The processing system 100 may include a memory 102. The memory 102 may be used in the processing carried out by the computer 110. The memory 102 may be part of the HVAC system. The memory 102 may be external to the HVAC system and may be, for example, a cloud memory. The memory 102 may include a plurality of memory devices and one or more of the plurality of memory devices may be part of the HVAC system and other ones of the plurality of memory devices may be part of a cloud memory. Data stored in the memory 102 may be stored in a local memory and/or in a cloud memory. The memory 102 may store requested indoor environmental conditions 104 (e.g., data representing requested indoor environmental conditions) associated with a future time period. The future time period may be any time period in the future of a present time. The future time period may start at the present time and may end at a future time (i.e., a point in time in the future of the present time). For example, the future time period may be a time period from the present time until one or more hours, h, (e.g., 1 h, e.g., 2 h, etc.), one or more days (e.g., 1 day, e.g., 2 days, etc.), etc. later than the present time. The future time period may start at a future time and may end at a point in time later than the future time. For example, the future time period may be a next day. For example, the future time period may start at a first point in time on the next day and may end at a second point in time, which is after the first point in time, on the next day. As used herein, "indoor environmental conditions" may describe one or more environmental parameters, such as an indoor temperature (e.g., a room temperature) and/or an indoor humidity. For example, the requested indoor environmental conditions may include an indoor temperature which is requested in the future time period. As used herein, "indoor environmental conditions" may refer to an indoor environment associated with the HVAC system. A predefined set point schedule may include predefined indoor environmental conditions (e.g., an indoor temperature and/or an indoor humidity) as a function of time of day and/or of day of the week. The predefined set point schedule may be stored in the memory 102. The computer 110 may be configured to acquire the predefined set point schedule and to determine the predefined indoor environmental conditions within the future time period as the requested indoor environmental conditions 104. The HVAC system may include a user interface. A user may be able to set indoor environmental conditions via the user interface. The set indoor environmental conditions may be stored in the memory 102. The computer 110 may be configured to acquire the set indoor environmental conditions and to determine the set indoor environmental conditions within the future time period as the requested indoor environmental conditions 104. The memory 102 may store predicted outdoor environmental conditions 106 within the future time period. As used herein, "outdoor environmental conditions" may describe one or more environmental parameters, such as an outdoor (e.g., an air) temperature, an outdoor humidity, and/or a solar surface radiation. As used herein, "outdoor environmental conditions" may refer to an outdoor environment associated with the HVAC system. The solar surface radiation may describe a cloud level. The computer 110 may be configured to determine a cloud level using the solar surface radiation. The predicted outdoor environmental conditions 106 may be determined using a weather forecast. For example, a weather forecast may provide future outdoor environmental conditions. The computer 110 may be configured to obtain (e.g., to download) the weather forecast for the future time period from a weather forecast service (e.g., from a cloud memory of the weather forecast service). The predicted outdoor environmental conditions 106 may impact the (cooling/heating) load required to achieve the requested indoor environmental conditions 104. As an example, an outside temperature which is at least 10 °C higher than an indoor temperature and/or a comparatively high solar surface radiation indicating a cloudless state may increase a cooling load of the HVAC system required to reduce the indoor temperature.

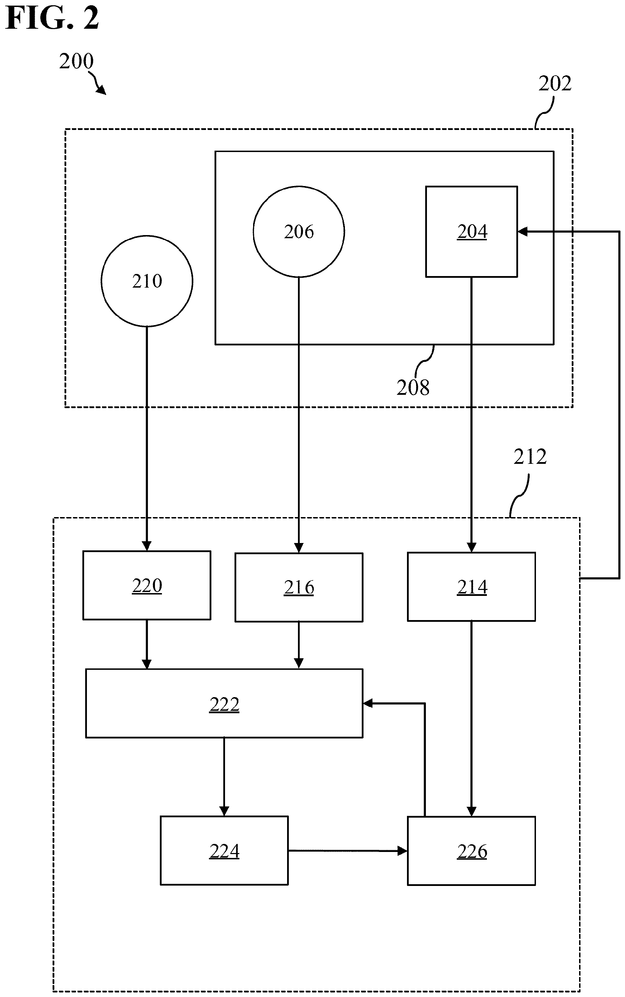

The processing system 100 may be configured to implement a trained load prediction model 112. The trained load prediction model 112 may be configured to generate (e.g., to output) a predicted load responsive to inputting indoor environmental conditions and outdoor environmental conditions. The trained load prediction model 112 may be obtained by training a load prediction model as described with reference to FIG. 2. The trained load prediction model 112 may determine a predicted load 114 for the future time period responsive to inputting the requested indoor environmental conditions 104 associated with the future time period and the predicted outdoor environmental conditions 106.

The computer 110 may be configured to provide control instructions 116 to control the HVAC system to reduce a load of the HVAC system within the future time period using the determined predicted load 114. For example, in the case of a comparatively high predicted load 114, the control instructions 116 may include instructions to start a cooling or heating earlier than a previously set schedule in order to reduce a slope of a cooling ramp or heating ramp. A lower ramp of heating or cooling may reduce an amount of energy required to achieve the requested indoor environmental conditions 104 within the future time period.

FIG. 2 shows a processing system 200 for training a load prediction model 222 used to control a HVAC system 202. The HVAC system 202 may include an indoor environment 208 (e.g., a building, a room in a building, and/or a zone in a building). The HVAC system 202 may include one or more HVAC devices 204 within the indoor environment 208. The one or more HVAC devices 204 may be configured to control the indoor environmental conditions within the indoor environment 208. The HVAC system 202 may include one or more indoor environmental sensors 206 within the indoor environment 208. The one or more indoor environmental sensors 206 may be configured to detect the indoor environmental conditions within the indoor environment 208. The HVAC system 202 may include one or more outdoor environmental sensors 210 located outside the indoor environment 208. The one or more outdoor environmental sensors 210 may be configured to detect the outdoor environmental conditions outside the indoor environment 208. The processing system 200 may include a computer 212 (e.g., configured similar to the computer 110). The computer 212 may be configured to control the HVAC system 202 (e.g., the one or more HVAC devices 204) to control (e.g., to keep, e.g., to change) the indoor environmental conditions within the indoor environment 208. The computer 212 may be configured to acquire (e.g., data representing) a load of the HVAC system 202 (e.g., a load of the one or more HVAC devices 204). The computer 212 may be configured to acquire (e.g., data representing) indoor environmental conditions 216 detected by the one or more indoor environmental sensors 206. The computer 212 may be configured to acquire (e.g., data representing) outdoor environmental conditions 220 detected by the one or more outdoor environmental sensors 210. The computer 212 may be configured to implement the load prediction model 222. The load prediction model 222 may be configured to generate a predicted load responsive to inputting indoor environmental conditions and outdoor environmental conditions. The load prediction model 222 may generate a predicted load 224 responsive to inputting the acquired indoor environmental conditions 216 and the acquired outdoor environmental conditions 220 into the load prediction model 222. The computer 212 may be configured to determine a loss value 226 by comparing the predicted load 224 with the acquired load 214. The computer 212 may be configured to train the load prediction model 222 to reduce the loss value 226. The training of the load prediction model 222 as described herein may be one iteration of a training process and the training may be carried out as a plurality of iterations.

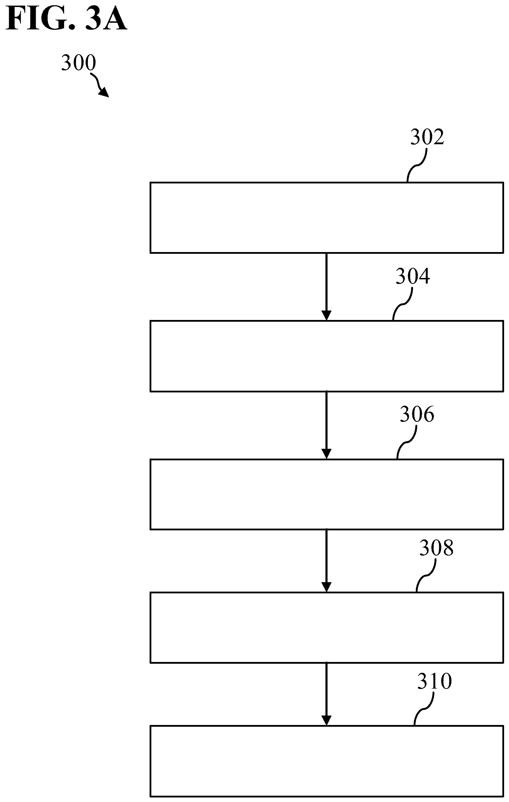

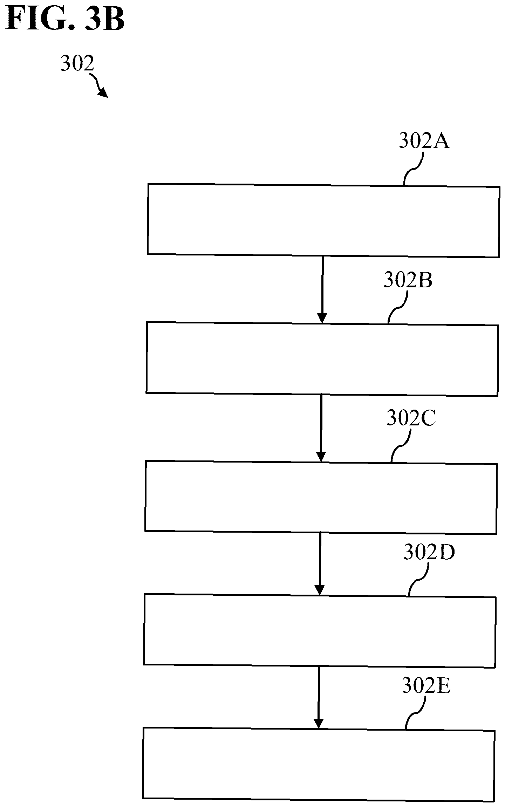

**FIG. 3A** shows a flow diagram of a method 300 of controlling a HVAC system according to various embodiments. The method 300 may include providing a trained load prediction model which is capable to generate a predicted load responsive to inputting indoor environmental conditions and outdoor environmental conditions into the load prediction model (in 302). The method 300 may include determining requested indoor environmental conditions associated with a future time period (in 304). The method 300 may include determining predicted outdoor environmental conditions within the future time period using a weather forecast (e.g., via a weather forecast service) (in 306). The method 300 may include inputting the requested indoor environmental conditions and the predicted outdoor environmental conditions into the trained load prediction model to determine (e.g., to generate) a predicted load for the future time period (in 308). The method 300 may include controlling the HVAC system to reduce a load of the HVAC system within the future time period using the determined predicted load. The trained load prediction model may be provided (in 302) by training a load prediction model. **FIG. 3B** shows a flow diagram of a method of training a load prediction model used to control a HVAC system according to various embodiments. The training method may include controlling indoor environmental conditions using a HVAC system (in 302A). The training method may include detecting the indoor environmental conditions, a load of the HVAC system, and outdoor environmental conditions (in 302B). The training method may include inputting the detected indoor environmental conditions and the detected outdoor environmental conditions into the load prediction model to generate a predicted load (in 302C). The training method may include determining a loss value by comparing the predicted load with the detected load of the HVAC system (in 302D). The training method may include training the load prediction model to reduce the loss value (in 302E). The training method may include one or more iterations (e.g., plurality of iterations) and each iteration may include the above described training method.

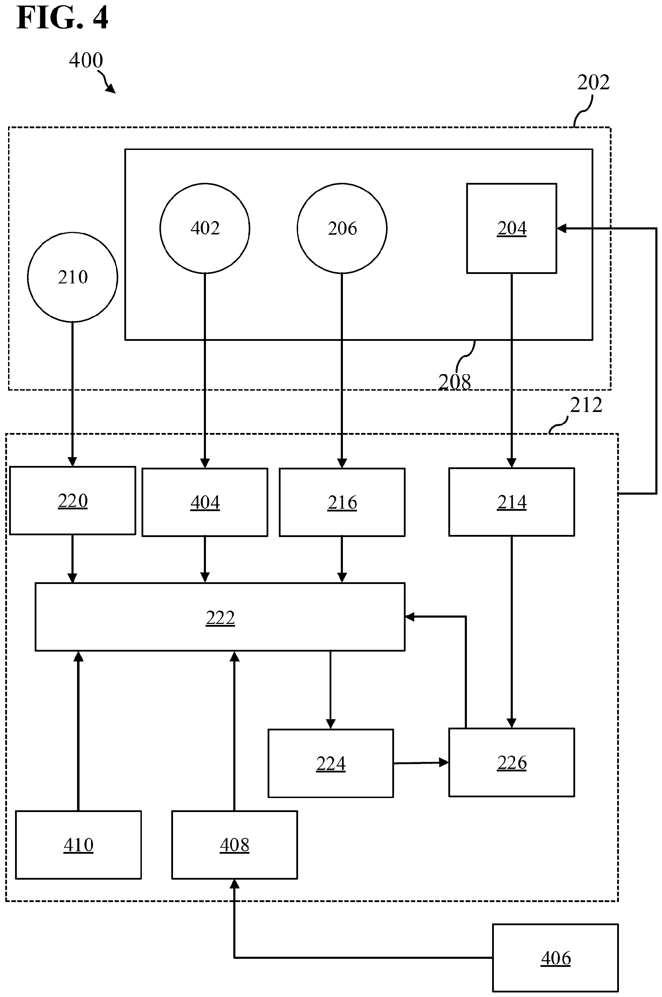

**FIG. 4** shows a processing system 400 for training the load prediction model 222 used to control the HVAC system 202. In addition to the processing system 200, the computer 212 may be configured to acquire occupancy information 404 which describe occupancy of people within the indoor environment 208. For example, the HVAC system 202 may further include one or more occupancy sensors 402 (e.g., a wireless occupancy sensor, e.g., a passive infrared sensor, e.g., a motion sensor, etc.) configured to detect (e.g., infrared-based, e.g., ultrasonic-based, e.g., radar-based, e.g., microwave-based, etc.) an occupancy within the indoor environment 208. The one or more occupancy sensors 402 may be configured to provide the detected occupancy as occupancy information 404 to the computer 212. According to various aspects, a memory may store personal calendar information, meeting information, etc. The computer 212 may be configured to determine an occupancy of the indoor environment 208 using the personal calendar information, meeting information, etc. in order to acquire the occupancy information 404. The computer 212 may be configured to implement an occupancy prediction model (e.g., using occupancy statistics) which describes, a clock in time of occupants of the indoor environment 208, a clock out time of occupants of the indoor environment 208, and/or daily habits of people within the indoor environment 208 to predict an occupancy within the indoor environment 208. The computer 212 may be configured to use the occupancy prediction model to determine a predicted occupancy within the indoor environment 208 as occupancy information 404. The computer 212 may be configured to acquire a time of day 410 (e.g., using an internal clock of the computer and/or an external server providing a clock time) at which the load 214 of the HVAC system 202, the indoor environmental conditions 216, the outdoor environmental conditions 220 are detected. Optionally, the computer 212 may be configured to acquire a user comfort 408 of each user within the indoor environment 208. The user comfort may represent a thermal comfort of the user. The user comfort 408 may be a user feedback provided via a user device 406. The computer 212 may be configured to implement a comfort model capable to predict a user comfort of each user using the indoor environmental conditions. The user comfort 408 may be a predicted mean vote representing a mean over all user comforts. The load prediction model 222 may be configured to generate the predicted load 224 responsive to inputting the acquired indoor environmental conditions 216, the acquired outdoor environmental conditions 220, the acquired occupancy information 216, the acquired time of day 410, and optionally the acquired user comfort 408 into the load prediction model 222. As described with reference to the processing system 200, the computer 212 may be configured to determine a loss value 226 by comparing the predicted load 224 with the acquired load 214 and may be configured to train the load prediction model 222 to reduce the loss value 226 (e.g., using a plurality of iterations).

A computer acquiring data (e.g., respective conditions), as described herein, may refer to a direct acquisition from a sensors or device or to an indirect acquisition of the data from a memory which stores the data. For example, one or more acquisition modules may be configured to acquire the data and to store the data in the memory. The data may be stored in a database within the memory. It is noted that a load prediction model, as described herein, may include a plurality of individual models and each individual may be configured to provide a respective predicted load responsive to inputting one or more of the data/information described herein. In this case, the predicted load described herein may be a sum of all respective predicted loads determined by the plurality of individual models.

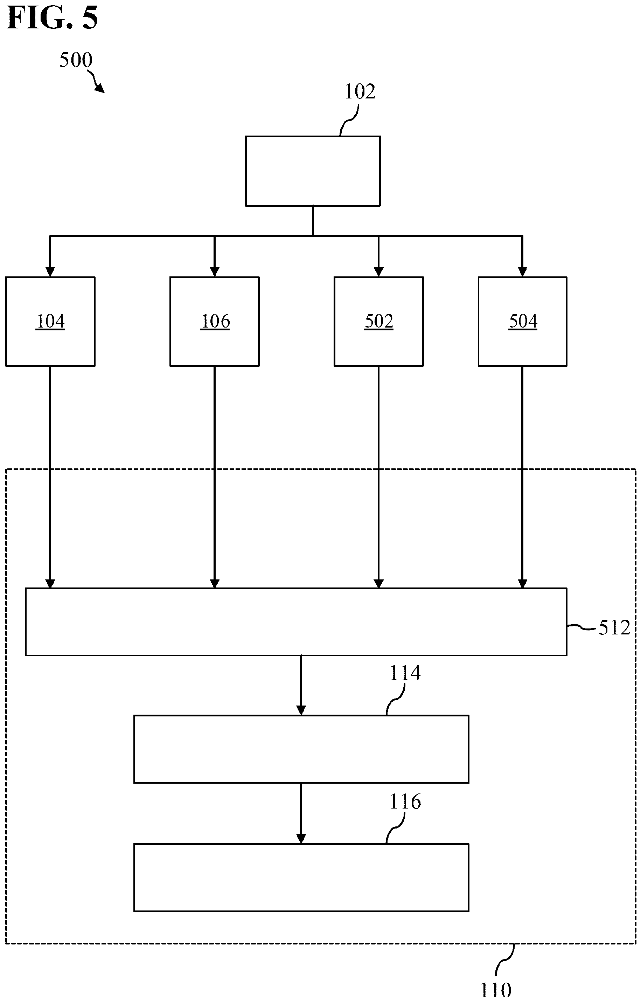

**FIG. 5** shows a processing system 500 for controlling a HVAC system according to various embodiments. The processing system 500 may be similar to the processing system 100, wherein the computer 110 is configured to implement a trained load prediction model 512. The trained load prediction model 512 may be configured to generate (e.g., to output) a predicted load responsive to inputting indoor environmental conditions, outdoor environmental conditions, a time of day 502, and a predicted occupancy 504 (and optionally user comforts). The computer 110 may be configured to determine the predicted occupancy 504 using personal calendar information, meeting information, etc. stored in the memory, using occupancy statistics, and/or using an occupancy prediction model capable to predict an occupancy within the indoor environment. The trained load prediction model 512 may be obtained by training a load prediction model as described with reference to FIG. 4. The time of day 502 may be determined using a time of the future time period.

In accordance with the processing system 100 and/or the processing system 500, the computer 110 may be configured to detect a load of the HVAC system within the future time period. The computer 110 may be configured to determine a further loss value by comparing the predicted load for the future time period with the load of the HVAC system detected within the future time period. The computer 110 may be configured to adapt (e.g., to train) the load prediction model (e.g., the load prediction model 112, e.g., the load prediction model 512) to reduce the further loss value. The training may be carried out as described with the processing system 200 and the processing system 400. Illustratively, the trained load prediction model may be further trained. For example, the trained load prediction model may be further trained at constant time intervals (e.g., of 1 day, e.g., of 1 week, e.g., of 1 month, etc.).

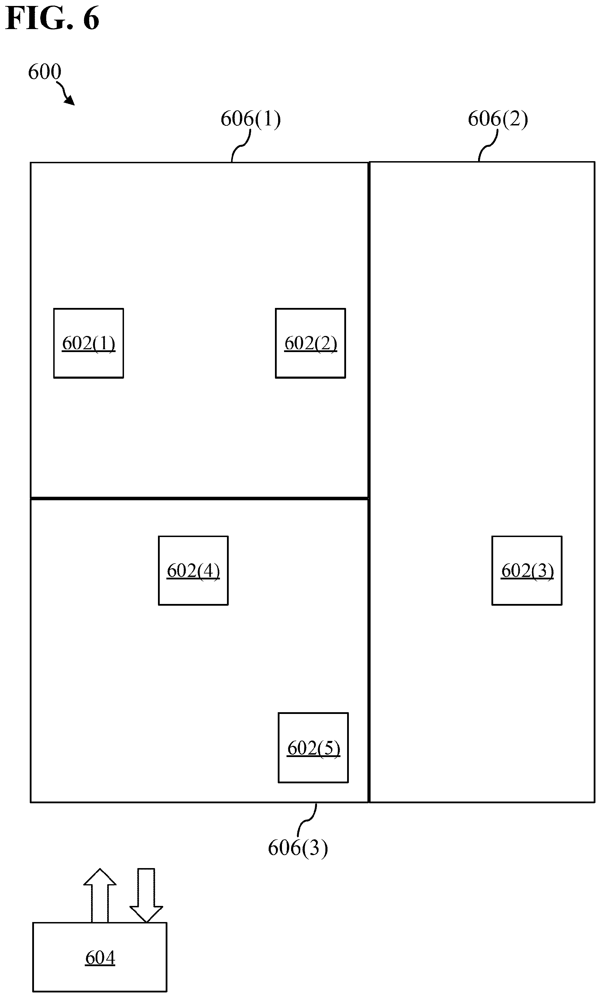

**FIG. 6** shows an exemplary HVAC system 600 according to various embodiments. The HVAC system 600 may be configured to carry out the method 300. The HVAC system 600 may include a control device 604. The control device 604 may include an internal memory and/or may communicate with an external memory (e.g., a cloud). The memory may store a trained load prediction model (e.g., the trained load prediction model 112, e.g., the trained load prediction model 512). The memory may further store requested indoor environmental conditions for a future time period and a weather forecast for the future time period describing predicted outdoor environmental conditions within the future time period. Optionally, the memory may store data representing a predicted occupancy or an occupancy model to determine a predicted occupancy. Optionally the memory may store data representing a thermal comfort of at least one occupant of the indoor environment which is controlled by the HVAC system. The control device 604 may include an internal computer or may communicate with an external computer (e.g., using cloud computing) configured to implement the trained load prediction model to determine a predicted load (responsive to inputting the requested indoor environmental conditions and the predicted outdoor environmental conditions, and optionally a time of day, the data representing the predicted occupancy, and/or the data representing the thermal comfort of the at least one occupant). The control device 604 may be configured to control the HVAC system 600 (e.g., a plurality of HVAC devices 602(1), 602(2), 602(3), 602(4), 602(5)) to reduce a load of the HVAC system 600 within the future time period using the determined predicted load. According to various aspects, the indoor environment may include a plurality of zones (e.g., rooms in a building) 606(1), 606(2), 606(3). The control device 604 may be configured to use the trained load prediction model to determine a respective predicted load for each zone of the plurality of zones 606(1), 606(2), 606(3) and may be configured to control the HVAC devices associated with the respective zone to reduce a load within the future time period using the respectively determined predicted load. As an example, the control device 604 may determine a predicted load for the zone 606(1) using the load prediction model and may control a first HVAC device 602(1) and a second HVAC device 606(2) to reduce a load of the first HVAC device 602(1) and the second HVAC device 606(2) within the future time period.

## Claims

1. A method (300) of controlling a heating, ventilation, and air-conditioning, HVAC, system, the method (300) comprising:
training a load prediction model (302), the training comprising:
• controlling indoor environmental conditions using the HVAC system (302A),
• detecting the indoor environmental conditions, a load of the HVAC system, and outdoor environmental conditions (302B), wherein the indoor environmental conditions comprise an indoor temperature,
• inputting the detected indoor environmental conditions and the detected outdoor environmental conditions into the load prediction model to generate a predicted load (302C),
• determining a loss value by comparing the predicted load with the detected load of the HVAC system (302D), and
• training the load prediction model to reduce the loss value (302E);
determining requested indoor environmental conditions associated with a future time period (304), the requested indoor environmental conditions comprising an indoor temperature requested in the future time period;
determining predicted outdoor environmental conditions within the future time period using a weather forecast (306);
inputting the requested indoor environmental conditions and the predicted outdoor environmental conditions into the trained load prediction model to determine a predicted load for the future time period (308); and
controlling the HVAC system to reduce a load of the HVAC system within the future time period using the determined predicted load (310).

2. The method (300) according to claim 1,
wherein the HVAC system comprises a variable refrigerant flow system.

3. The method (300) according to claim 1 or 2,
wherein the predicted load represents an amount of energy required by the HVAC system to achieve the requested indoor environmental conditions during the future time period.

4. The method (300) according to any one of claims 1 to 3,
wherein indoor environmental conditions further comprise an indoor humidity.

5. The method (300) according to any one of claims 1 to 4,
wherein the outdoor environmental conditions comprise an outdoor temperature.

6. The method (300) according to claim 5,
wherein outdoor environmental conditions further comprise a solar surface radiation and/or an outdoor humidity.

7. The method (300) according to any one of claims 1 to 6, further comprising:
detecting an occupancy rate of an indoor zone in which the indoor environmental conditions are controlled by the HVAC system; and
determining a predicted occupancy rate within the future time period using calendar information and/or occupancy statistics representing an occupancy of the indoor zone;
wherein inputting (302C) the detected indoor environmental conditions and the detected outdoor environmental conditions into the load prediction model to generate the predicted load comprises:
• inputting the detected indoor environmental conditions, the detected outdoor environmental conditions, and the detected occupancy rate into the load prediction model to generate the predicted load;
wherein inputting (308) the requested indoor environmental conditions and the predicted outdoor environmental conditions into the trained load prediction model to determine the predicted load for the future time period comprises:
• inputting the requested indoor environmental conditions, the predicted outdoor environmental conditions, and the predicted occupancy rate into the trained load prediction model to determine the predicted load for the future time period.

8. The method (300) according to any one of claims 1 to 7,
wherein inputting (302C) the detected indoor environmental conditions and the detected outdoor environmental conditions into the load prediction model to generate the predicted load comprises:
• inputting the detected indoor environmental conditions, the detected outdoor environmental conditions, and a time of day at which the indoor environmental conditions, the load of the HVAC system, and the outdoor environmental conditions are detected into the load prediction model to generate the predicted load;
wherein inputting (308) the requested indoor environmental conditions and the predicted outdoor environmental conditions into the trained load prediction model to determine the predicted load for the future time period comprises:
• inputting the requested indoor environmental conditions, the predicted outdoor environmental conditions, and a time of day associated with the future time period into the trained load prediction model to determine the predicted load for the future time period.

9. The method (300) according to any one of claims 1 to 8, further comprising:
• detecting a load of the HVAC system in the future time period;
• determining a further loss value by comparing the predicted load for the future time period with the load of the HVAC system detected in future time period; and
• further training the load prediction model to reduce the further loss value.

10. A heating, ventilation, and air-conditioning, HVAC, system, comprising one or more computers (110) configured to:
• implement the load prediction model (112) trained in accordance with any one of claims 1 to 9;
• receive requested indoor environmental conditions (104), the requested indoor environmental conditions (104) describing predicted indoor environmental conditions for a future time period;
• receive a weather forecast for the future time period, the weather forecast describing predicted outdoor environmental conditions (106) within the future time period;
• inputting the requested indoor environmental conditions (104) and the predicted outdoor environmental conditions described by the weather forecast into the trained load prediction model (112) to determine a predicted load (114) for the future time period; and
• controlling the HVAC system to reduce a load of the HVAC system within the future time period using the determined predicted load (114).

## Patentansprüche

1. Verfahren (300) zur Steuerung eines Heizungs-, Lüftungs- und Klimatisierungssystems (HVAC-System), wobei das Verfahren (300) Folgendes umfasst:
Trainieren eines Lastvorhersagemodells (302), wobei das Trainieren Folgendes umfasst:
• Steuern der Innenumgebungsbedingungen unter Verwendung des HVAC-Systems (302A),
• Erfassen der Innenumgebungsbedingungen, einer Last des HVAC-Systems und der Außenumgebungsbedingungen (302B), wobei die Innenumgebungsbedingungen eine Innentemperatur umfassen,
• Eingeben der erfassten Innenumgebungsbedingungen und der erfassten Außenumgebungsbedingungen in das Lastvorhersagemodell, um eine vorhergesagte Last (302C) zu erzeugen,
• Bestimmen eines Verlustwerts durch Vergleichen der vorhergesagten Last mit der erfassten Last des HVAC-Systems (302D), und
• Trainieren des Lastvorhersagemodells zum Reduzieren des Verlustwerts (302E);
Bestimmen angeforderter Innenumgebungsbedingungen, die einem zukünftigen Zeitraum zugeordnet sind (304), wobei die angeforderten Innenumgebungsbedingungen eine Innentemperatur umfassen, die in dem zukünftigen Zeitraum angefordert wird;
Bestimmen vorhergesagter Außenumgebungsbedingungen innerhalb des zukünftigen Zeitraums unter Verwendung einer Wettervorhersage (306);
Eingeben der angeforderten Innenumgebungsbedingungen und der vorhergesagten Außenumgebungsbedingungen in das trainierte Lastvorhersagemodell, um eine vorhergesagte Last für den zukünftigen Zeitraum (308) zu bestimmen; und
Steuern des HVAC-Systems zum Reduzieren einer Last des HVAC-Systems innerhalb des zukünftigen Zeitraums unter Verwendung der bestimmten vorhergesagten Last (310).

2. Verfahren (300) nach Anspruch 1,
wobei das HVAC-System ein System mit variablem Kältemittelfluss umfasst.

3. Verfahren (300) nach Anspruch 1 oder 2,
wobei die vorhergesagte Last eine Energiemenge repräsentiert, die durch das HVAC-System benötigt wird, um die angeforderten Innenumgebungsbedingungen während des zukünftigen Zeitraums zu erreichen.

4. Verfahren (300) nach einem der Ansprüche 1 bis 3,
wobei die Innenumgebungsbedingungen ferner eine Innenluftfeuchtigkeit umfassen.

5. Verfahren (300) nach einem der Ansprüche 1 bis 4,
wobei die Außenumgebungsbedingungen eine Außentemperatur umfassen.

6. Verfahren (300) nach Anspruch 5,
wobei Außenumgebungsbedingungen ferner eine Sonnenoberflächenstrahlung und/oder eine Außenluftfeuchtigkeit umfassen.

7. Verfahren (300) nach einem der Ansprüche 1 bis 6, ferner umfassend:
Erfassen einer Belegungsrate einer Innenzone, in der die Innenumgebungsbedingungen durch das HVAC-System gesteuert werden; und
Bestimmen einer vorhergesagten Belegungsrate innerhalb des zukünftigen Zeitraums unter Verwendung von Kalenderinformationen und/oder Belegungsstatistiken, die eine Belegung der Innenzone repräsentieren;
wobei das Eingeben (302C) der erfassten Innenumgebungsbedingungen und der erfassten Außenumgebungsbedingungen in das Lastvorhersagemodell zum Erzeugen der vorhergesagten Last Folgendes umfasst:
• Eingeben der erfassten Innenumgebungsbedingungen, der erfassten Außenumgebungsbedingungen und der erfassten Belegungsrate in das Lastvorhersagemodell, um die vorhergesagte Last zu erzeugen;
wobei das Eingeben (308) der angeforderten Innenumgebungsbedingungen und der vorhergesagten Außenumgebungsbedingungen in das trainierte Lastvorhersagemodell zum Bestimmen der vorhergesagten Last für den zukünftigen Zeitraum Folgendes umfasst:
• Eingeben der angeforderten Innenumgebungsbedingungen, der vorhergesagten Außenumgebungsbedingungen und der vorhergesagten Belegungsrate in das trainierte Lastvorhersagemodell, um die vorhergesagte Last für den zukünftigen Zeitraum zu bestimmen.

8. Verfahren (300) nach einem der Ansprüche 1 bis 7,
wobei das Eingeben (302C) der erfassten Innenumgebungsbedingungen und der erfassten Außenumgebungsbedingungen in das Lastvorhersagemodell zum Erzeugen der vorhergesagten Last Folgendes umfasst:
• Eingeben der erfassten Innenumgebungsbedingungen, der erfassten Außenumgebungsbedingungen und einer Tageszeit, zu der die Innenumgebungsbedingungen, die Last des HVAC-Systems und die Außenumgebungsbedingungen erfasst werden, in das Lastvorhersagemodell, um die vorhergesagte Last zu erzeugen;
wobei das Eingeben (308) der angeforderten Innenumgebungsbedingungen und der vorhergesagten Außenumgebungsbedingungen in das trainierte Lastvorhersagemodell zum Bestimmen der vorhergesagten Last für den zukünftigen Zeitraum Folgendes umfasst:
• Eingeben der angeforderten Innenumgebungsbedingungen, der vorhergesagten Außenumgebungsbedingungen und einer Tageszeit, die dem zukünftigen Zeitraum zugeordnet ist, in das trainierte Lastvorhersagemodell, um die vorhergesagte Last für den zukünftigen Zeitraum zu bestimmen.

9. Verfahren (300) nach einem der Ansprüche 1 bis 8, ferner umfassend:
• Erfassen einer Last des HVAC-Systems in dem zukünftigen Zeitraum;
• Bestimmen eines weiteren Verlustwerts durch Vergleichen der vorhergesagten Last für den zukünftigen Zeitraum mit der Last des HVAC-Systems, die in dem zukünftigen Zeitraum erfasst wird; und
• weiteres Trainieren des Lastvorhersagemodells, um den weiteren Verlustwert zu reduzieren.

10. Heizungs-, Lüftungs- und Klimatisierungssystem (HVAC-System), umfassend einen oder mehrere Computer (110), die dazu ausgelegt sind:
• das Lastvorhersagemodell (112) zu implementieren, das gemäß einem der Ansprüche 1 bis 9 trainiert ist;
• die angeforderten Innenumgebungsbedingungen (104) zu empfangen, wobei die angeforderten Innenumgebungsbedingungen (104) vorhergesagte Innenumgebungsbedingungen für einen zukünftigen Zeitraum beschreiben;
• eine Wettervorhersage für den zukünftigen Zeitraum zu empfangen, wobei die Wettervorhersage vorhergesagte Außenumgebungsbedingungen (106) innerhalb des zukünftigen Zeitraums beschreibt;
• die angeforderten Innenumgebungsbedingungen (104) und die vorhergesagten Außenumgebungsbedingungen, die durch die Wettervorhersage beschrieben werden, in das trainierte Lastvorhersagemodell (112) einzugeben, um eine vorhergesagte Last (114) für den zukünftigen Zeitraum zu bestimmen; und
• das HVAC-System zu steuern, um eine Last des HVAC-Systems innerhalb des zukünftigen Zeitraums unter Verwendung der bestimmten vorhergesagten Last (114) zu reduzieren.

## Revendications

1. Procédé (300) de commande d'un système de chauffage, ventilation et climatisation, HVAC, le procédé (300) comprenant :
l'entraînement d'un modèle de prédiction de charge (302), l'entraînement comprenant :
• la régulation de conditions ambiantes intérieures à l'aide du système HVAC (302A),
• la détection des conditions ambiantes intérieures, d'une charge du système HVAC, et de conditions ambiantes extérieures (302B), les conditions ambiantes intérieures comprenant une température intérieure,
• l'injection des conditions ambiantes intérieures détectées et des conditions ambiantes extérieures détectées dans le modèle de prédiction de charge pour générer une charge prédite (302C),
• la détermination d'une valeur de perte par comparaison de la charge prédite à la charge détectée du système HVAC (302D), et
• l'entraînement du modèle de prédiction de charge pour réduire la valeur de perte (302E) ;
la détermination de conditions ambiantes intérieures demandées associées à une période à venir (304), les conditions ambiantes intérieures demandées comprenant une température intérieure demandée dans la période à venir ;
la détermination de conditions ambiantes extérieures prédites au sein de la période à venir à l'aide d'une prévision météorologique (306) ;
l'injection des conditions ambiantes intérieures demandées et des conditions ambiantes extérieures prédites dans le modèle de prédiction de charge entraîné pour déterminer une charge prédite pour la période à venir (308) ; et
la commande du système HVAC pour réduire une charge du système HVAC au sein de la période à venir à l'aide de la charge prédite déterminée (310).

2. Procédé (300) selon la revendication 1,
le système HVAC comprenant un système à débit de réfrigérant variable.

3. Procédé (300) selon la revendication 1 ou 2,
la charge prédite représentant une quantité d'énergie requise par le système HVAC pour parvenir aux conditions ambiantes intérieures demandées durant la période à venir.

4. Procédé (300) selon l'une quelconque des revendications 1 à 3,
les conditions ambiantes intérieures comprenant en outre une humidité intérieure.

5. Procédé (300) selon l'une quelconque des revendications 1 à 4,
les conditions ambiantes extérieures comprenant une température extérieure.

6. Procédé (300) selon la revendication 5,
les conditions ambiantes extérieures comprenant en outre un rayonnement solaire en surface et/ou une humidité extérieure.

7. Procédé (300) selon l'une quelconque des revendications 1 à 6, comprenant en outre :
la détection d'un taux d'occupation dans une zone intérieure dans laquelle les conditions ambiantes intérieures sont régulées par le système HVAC ; et
la détermination d'un taux d'occupation prédit au sein de la période à venir à l'aide d'informations calendaires et/ou de statistiques d'occupation représentant une occupation de la zone intérieure ;
l'injection (302C) des conditions ambiantes intérieures détectées et des conditions ambiantes extérieures détectées dans le modèle de prédiction de charge pour générer la charge prédite comprenant :
• l'injection des conditions ambiantes intérieures détectées, des conditions ambiantes extérieures détectées, et du taux d'occupation détecté dans le modèle de prédiction de charge pour générer la charge prédite ;
l'injection (308) des conditions ambiantes intérieures demandées et des conditions ambiantes extérieures prédites dans le modèle de prédiction de charge entraîné pour déterminer la charge prédite pour la période à venir comprenant :
• l'injection des conditions ambiantes intérieures demandées, des conditions ambiantes extérieures prédites, et du taux d'occupation prédit dans le modèle de prédiction de charge entraîné pour déterminer la charge prédite pour la période à venir.

8. Procédé (300) selon l'une quelconque des revendications 1 à 7,
l'injection (302C) des conditions ambiantes intérieures détectées et des conditions ambiantes extérieures détectées dans le modèle de prédiction de charge pour générer la charge prédite comprenant :
• l'injection des conditions ambiantes intérieures détectées, des conditions ambiantes extérieures détectées, et d'une heure du jour à laquelle les conditions ambiantes intérieures, la charge du système HVAC, et les conditions ambiantes extérieures sont détectées dans le modèle de prédiction de charge pour générer la charge prédite ;
l'injection (308) des conditions ambiantes intérieures demandées et des conditions ambiantes extérieures prédites dans le modèle de prédiction de charge entraîné pour déterminer la charge prédite pour la période à venir comprenant :
• l'injection des conditions ambiantes intérieures demandées, des conditions ambiantes extérieures prédites, et d'une heure du jour associée à la période à venir dans le modèle de prédiction de charge entraîné pour déterminer la charge prédite pour la période à venir.

9. Procédé (300) selon l'une quelconque des revendications 1 à 8, comprenant en outre :
• la détection d'une charge du système HVAC dans la période à venir ;
• la détermination d'une valeur de perte supplémentaire par comparaison de la charge prédite pour la période à venir à la charge du système HVAC détectée dans la période à venir ; et
• l'entraînement supplémentaire du modèle de prédiction de charge pour réduire la valeur de perte supplémentaire.

10. Système de chauffage, ventilation et climatisation, HVAC, comprenant un ou plusieurs ordinateurs (110) configurés pour :
• mettre en œuvre le modèle de prédiction de charge (112) entraîné conformément à l'une quelconque des revendications 1 à 9 ;
• recevoir des conditions ambiantes intérieures demandées (104), les conditions ambiantes intérieures demandées (104) décrivant des conditions ambiantes intérieures prédites pour une période à venir ;
• recevoir une prévision météorologique pour la période à venir, la prévision météorologique décrivant des conditions ambiantes extérieures prédites (106) au sein de la période à venir ;
• injecter les conditions ambiantes intérieures demandées (104) et les conditions ambiantes extérieures prédites décrites par la prévision météorologique dans le modèle de prédiction de charge (112) entraîné pour déterminer une charge prédite (114) pour la période à venir ; et
• commander le système HVAC pour réduire une charge du système HVAC au sein de la période à venir à l'aide de la charge prédite déterminée (114).
